Europäisches Patentamt

European Patent Office

Office européen des brevets

(11) Veröffentlichungsnummer: **0 405 566 A1**

# EUROPÄISCHE PATENTANMELDUNG

(21) Anmeldenummer: 90112391.9

(22) Anmeldetag: 29.06.90

(51) Int. Cl.5: **F02F 1/24**, F02B 67/00

(30) Priorität: 30.06.89 DE 3921662

(43) Veröffentlichungstag der Anmeldung:
02.01.91 Patentblatt 91/01

(84) Benannte Vertragsstaaten:
DE FR GB IT

(71) Anmelder: **Elsbett, Ludwig**
**Industriestrasse 14**
**D-8543 Hilpoltstein(DE)**

Anmelder: **Elsbett, Günter**
**Industriestrasse 14**
**D-8543 Hilpoltstein(DE)**

Anmelder: **Elsbett, Klaus**
**Industriestrasse 14**
**D-8543 Hilpoltstein(DE)**

(72) Erfinder: **Elsbett, Ludwig**
**Industriestrasse 14**
**D-8543 Hilpoltstein(DE)**
Erfinder: **Elsbett, Günter**
**Industriestrasse 14**
**D-8543 Hilpoltstein(DE)**
Erfinder: **Elsbett, Klaus**
**Industriestrasse 14**
**D-8543 Hilpoltstein(DE)**

(54) Gasführung im gemeinsamen Zylinderkopf einer mindestens dreizylindrigen Kolbenbrennkraftmaschine.

(57) Es wird vorgeschlagen, die Abgassammelwege (3, 4) einer drei- oder mehrzylindrigen Brennkraftmaschine im Zylinderkopf (1) zusammenzuführen und nur eine Öffnung nach außen zu belassen; ebenso nur eine Einlaßöffnung (5) am Zylinderkopf (1) außen vorzusehen. Der Abgasturbolader (9) soll als Teil des Zylinderkopfes (1) in der Deckel (7) integriert sein, ebenso der Ladeluftküler (12).

EP 0 405 566 A1

Bild 1

# GASFÜHRUNG IM GEMEINSAMEN ZYLINDERKOPF EINER MINDESTENS DREIZYLINDRIGEN KOLBEN-BRENNKRAFTMASCHINE

Die Erfindung geht aus von einer Gasführung im gemeinsamen Zylinderkopf einer mindestens dreizylindrigen, insbesondere selbstzündenden Kolbenbrennkraftmaschine.

Aus der DE-PS 25 56 662 ist eine Anordnung für die Gasführung in einem Zylinderkopf einer vierzylindrigen Kolbenbrennkraftmaschine bekannt, wobei die Gaswege innerhalb des Zylinderkopfes so zusammengeführt sind, daß vom Zylinderkopf weg nach außen nur eine Öffnung für den Auslaß vorhanden ist.

In der DE-PS 74 40 40 ist ein Motor beschrieben, der eine Ansaugkammer aufweist, die durch eine Längswand in der Abdeckhaube abgetrennt ist und von dort einzelne Einlässe zu den Einzelköpfen hat.

Es wurde auch bereits vorgeschlagen, zum Zwecke einer zusatzlichen Verwirbelung und Mischung der Abgase die Abgasführungen im Zylinder zusammenzufassen. Dies wurde erreicht durch die Schaffung von Hindernissen und zusätzlichen Toträumen im Abgassammelkanal. Dem Abgas sollte dadurch eine längere Reaktionszeit eingeräumt werden, die den Schadstoffausstoß verringern sollte.

Eine wünschenswerte Steigerung des motorischen Wirkungsgrades setzt aber eine Weiterentwicklung und Verbesserung der Wege voraus, die die Gase zu den Verbrennungsräumen einer Brennkraftmaschine hin- und von diesen wegführen. Nur dann kann die Abgasenergie entsprechend für die Frischluftladung erhalten werden. Um einen positiven Ladungswechsel zu erreichen, muß die in den Auslaß gehende Energie für die Ansaugluft so genutzt werden, daß dabei zusätzliche Energie für die Kolbenarbeit im Ansaughub erzeugt wird.

Aufgabe vorliegender Anmeldung ist, durch kürzestmögliche Gaswege bei Ein- und Auslaß zwischen Ventilen und Turbo Druck- und Wärmeverluste zu vermeiden, um möglichst viel Abgasenergie auf den Turbolader zu bringen. D. h. vor allem, daß die am Ventil vorherrschende Luftgeschwindigkeit beibehalten werden soll und nicht über unnötige Räume in Druck und dann wieder in Geschwindigkeit umgewandelt werden soll.

Gelöst wird die Aufgabe dadurch, daß die Gaswege innerhalb des Zylinderkopfes so zusammengeführt sind, daß vom Zylinderkopf weg nach außen nur eine Öffnung für den Auslaß und nur eine Öffnung für den Einlaß vorhanden sind und daß die Gaswege eine möglichst laminare Strömung ermöglichen.

Die großen Verluste, die ein Sammelrohr auf der Auspuff-und Ansaugseite mit sich bringt, können nur eingespart werden, wenn die Gaskanäle schon innerhalb des Zylinderkopfes so zusammengefaßt sind, daß nur je eine Öffnung für Auslaß und Einlaß für alle Zylinder im Zylinderkopf entsteht. An diese Öffnungen kann dann ein Turbo ohne Zwischenschaltung eines Auspuffsammelrohres angeschlossen werden. Dadurch werden die Wärmeverluste wie die Druckverluste eines Sammelrohres eingespart. Weiter werden die Kosten der Sammelleitungen gespart, die Anfälligkeit für Risse und der erhebliche Raumbedarf vermieden sowie die über das Auspuffsammelrohr gegebene Aufheizung des Motorraumes unterbunden. Eine solche Anordnung führt in der Weiterentwicklung dazu, daß der übliche Abgasturbolader gänzlich in den Zylinderkopf integriert werden kann. Für solche Motoren, die bereits die Einspritztechnik in den Zylinderkopf integriert haben, bedeutet dies, daß der Mischvorgang der Brennkraftmaschine komplett im Zylinderkopf vorbereitet wird und beide Energiekomponenten, Luft und Kraftstoff, im Zylinderkopf geordnet werden. Die bei anderen Lösungen durch Anbaugeräte bedingten Kompromisse und Wirkungsgradverluste entfallen.

Für den Frischlufteintritt in den Zylinder ist diese Anordnung besonders dann günstig, wenn die Einlaßventile durch einen Vornocken schon während des Auslaßhubes geöffnet werden. Die sich gegenseitig unterstützenden Auslaßstöße ergeben dann eine bessere Durchspülung des Zylinders und der Einlaßkanäle. Eine besondere Bedeutung ergibt sich damit für den dreizylindrigen Viertaktmotor (und dessen Vielfaches) durch 240 Grad Kurbelwinkel Gaswechselzeiten, da hier die Energieimpulse auch auf den Abgasturbolader unmittelbar aufeinander folgen, ohne daß sich die Ventilöffnungszeiten der Auslaßventile überschneiden. Von einer solchen kontinuierlichen Strömung im Einlaß einer Dreiergruppe hängt sowohl der Effekt der inneren Kühlung der Zylinder durch Frischluft wie auch eine erstrebenswerte Drallbildung im Zylinder ab.

Die Anordnung von Auslaß- und Einlaßventilen ist so gestaltet, daß die Auslaßventile der Dreiergruppe so eng zusammenstehen, daß insgesamt eine kürzestmögliche Verbindung zwischen Ventilen und der gemeinsamen Auslaßöffnung am Zylinderkopf entsteht. Die Verbindung zur Einlaßseite übernimmt ein am Turbolader angesetztes überbrückendes Verbindungsstück mit oder ohne eingebauten Ladeluftkühler.

Diese für Turbomotoren günstige Anordnung hat auch Vorteile für Saugmotoren. Neben der Einsparung von Abgassammel- und Zuführungsrohr und der entsprechenden Platzersparnis vermindert hier die kinetische Energie des Auspuffgases im Auspuffrohr die Gaswechselarbeit bezüglich des Einlasses im Saugmotor.

Es folgen Ausführungsbeispiele:

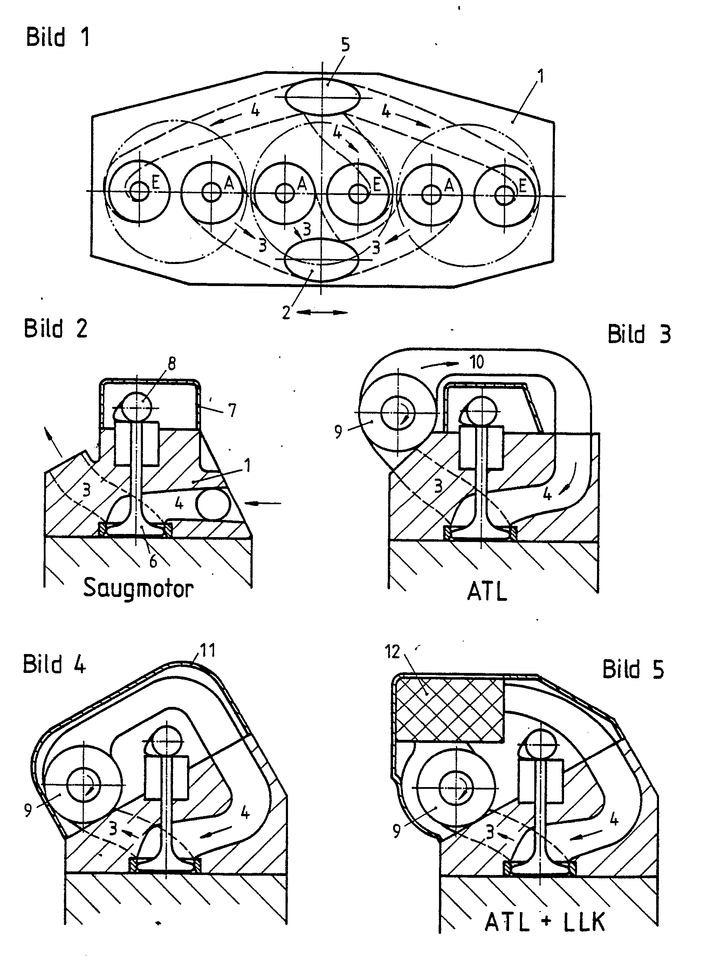

Bild 1 zeigt in Draufsicht einen Zylinderkopf (1) für drei Zylinder mit je einem Auslaßventil (A) und einem Einlaßven til (E). Die Verbindung zur gemeinsamen Auslaßöffnung (2) für alle drei Zylinder ist durch die Abgaskanäle (3) gegeben. Die Einlaßkanäle (4) stellen die Verbindung zur gemeinsamen Einlaßöffnung (5) dar.

In den Ein- sowie Auslaßkanälen ist durch eine glatte Innenraumgestaltung und direkte Linienführung eine möglichst laminare Strömung gewährleistet.

Bild 2 zeigt im Querschnitt den Verlauf der Kanäle (3) und (4) von den Ventilen (6) zur Auspufföffnung (2) und Ansaugöffnung (5) im Saugmotor. In Richtung der Pfeile wird das Auspuff- oder Ansaugrohr ohne Zwischenschaltung eines Sammelrohres angeschlossen. Die Nockenwelle (8) unter dem Zylinderkopfdeckel (7) betätigt die Ventile (6), wobei dem Einlaßventilnocken ein Vornocken angeschlossen sein kann.

Bild 3 zeigt einen Abgasturbolader (9), der unmittelbar auf die gemeinsame Abgasöffnung (2) ohne Zwischenschaltung einer Sammelleitung aufgesetzt ist. Die Rohrverbindung (10) ist die Brücke zur gemeinsamen Einlaßöffnung (5).

Bild 4 zeigt, wie in einem speziell konstruierten Kopfdeckel (11) der Turbo integriert sein kann.

Bild 5 zeigt, daß auch ein Ladeluftkühler (12) mit in den Deckel (11) integriert werden kann.

**Ansprüche**

1. Gasführung im gemeinsamen Zylinderkopf einer mindestens dreizylindrigen, insbesondere selbstzündenden Kolbenbrennkraftmaschine, dadurch gekennzeichnet, daß die Gaswege innerhalb des Zylinderkopfes so zusammengeführt sind, daß vom Zylinderkopf weg nach außen nur eine Öffnung für den Auslaß und nur eine Öffnung für den Einlaß vorhanden sind und daß die Gaswege eine möglichst laminare Strömung ermöglichen.

2. Gasführung im gemeinsamen Zylinderkopf nach Anspruch 1, dadurch gekennzeichnet, daß Ein- und Auslaß durch einen Abgasturbolader verbunden sind.

3. Gasführung im gemeinsamen Zylinderkopf nach Anspruch 2, dadurch gekennzeichnet, daß der Abgasturbolader unmittelbar als Brücke zwischen Auslaß- und Einlaßöffnung am Zylinderkopf angebracht ist.

4. Gasführung im gemeinsamen Zylinderkopf nach einem oder mehreren der vorgenannten Ansprüche, dadurch gekennzeichnet, daß der Abgasturbolader in den Zylinderkopfdeckel integriert ist.

5. Gasführung im gemeinsamen Zylinderkopf nach einem oder mehreren der vorgenannten Ansprüche, dadurch gekennzeichnet, daß die Integration des Abgasturboladers in den Zylinderkopf/-deckel als Teil des Zylinderkopfdeckels ausgeführt ist.

6. Gasführung im gemeinsamen Zylinderkopf nach einem oder mehreren der vorgenannten Ansprüche, dadurch gekennzeichnet, daß der Ladeluftkühler als Teil des Zylinderkopfdeckels ausgeführt ist.

7. Gasführung im gemeinsamen Zylinderkopf nach einem oder mehreren der vorgenannten Ansprüche, dadurch gekennzeichnet, daß der Zylinderkopf/-deckel neben der Abgasturboaufladung auch die Einspritzanlage integriert.

Bild 1

Bild 2

8

7

1

3

4

6

Saugmotor

Bild 3

10

9

3

4

ATL

Bild 4

11

9

3

4

Bild 5

12

9

3

4

ATL + LLK

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-2508952 (DAIMLER-BENZ) <br> * das ganze Dokument * <br> ---- | 1 | F02F1/24 <br> F02B67/00 |
| X | FR-A-521577 (EMERSON) <br> * Seite 4, Zeile 1 - Seite 4, Zeile 52; Figur 1 * <br> --- | 1 | |
| A | DE-A-3543410 (FISCHER) <br> * das ganze Dokument * <br> ---- | 2 | |
| A | GB-A-206287 (WILDE) <br> * Seite 2, Zeile 40 - Seite 2, Zeile 62; Figur 3 * <br> ----- | 1 | |

| RECHERCHIERTE SACHGEBIETE (Int. Cl.5) |
|---|
| F02F <br> F02B |

Der vorliegende Recherchenbericht wurde für alle Patentansprüche erstellt

| Recherchenort | Abschlußdatum der Recherche | Prüfer |
|---|---|---|
| DEN HAAG | 20 SEPTEMBER 1990 | WASSENAAR G. |

EPO FORM 1503 03.82 (P0403)